Europäisches Patentamt

European Patent Office

Office européen des brevets

(11) Publication number: **0 097 159**
**B1**

# EUROPEAN PATENT SPECIFICATION

(45) Date of publication of patent specification: **15.03.89**

(51) Int. Cl.⁴: **G 06 F 11/10**

(21) Application number: **82900591.7**

(22) Date of filing: **30.12.81**

(88) International application number:
**PCT/US81/01767**

(87) International publication number:
**WO 83/02345 07.07.83 Gazette 83/16**

(54) TWO BIT PER SYMBOL SEC/DED CODE.

(43) Date of publication of application:
**04.01.84 Bulletin 84/01**

(45) Publication of the grant of the patent:
**15.03.89 Bulletin 89/11**

(84) Designated Contracting States:
**DE FR GB**

(56) References cited:
US-A-3 634 821
US-A-3 755 779
US-A-3 825 893
US-A-4 077 028
US-E- 28 923

IEEE TRANSACTIONS ON COMPUTERS, vol.
C-27, no. 5, May 1978, pages 455-459, IEEE,
New York, US; S.M. REDDY: "A class of linear
codes for error control in byte-per-card
organized digital systems"

IBM TECHNICAL DISCLOSURE BULLETIN, vol.
22, no. 5, October 1979, pages 2004-2005, New
York, US; C.L. CHEN: "Error correcting code for
3-bit package error detection"

(73) Proprietor: **International Business Machines
Corporation
Old Orchard Road
Armonk, N.Y. 10504 (US)**

(72) Inventor: **CHEN, Chin-Long
50 Pye Lane
Wappingers Falls, NY 12590 (US)**

(74) Representative: **Barth, Carl Otto et al
IBM Deutschland GmbH Patentabteilung
Schönaicher Strasse 220
D-7030 Böblingen (DE)**

(56) References cited:

IBM TECHNICAL DISCLOSURE BULLETIN, vol.
18, no. 4, September 1975, pages 1062-1064,
New York, US; D.W. PRICE: "81, 64-Byte error
correction code"

IBM TECHNICAL DISCLOSURE BULLETIN, vol.
23, no. 8, January 1981, pages 3808-3810, New
York, US; C.L. CHEN: "Error correcting code for
multiple package error detection"

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

EP 0 097 159 B1

**EP  0 097 159  B1**

(58) References cited:

IBM JOURNAL OF RESEARCH & DEVELOPMENT, vol. 24, no. 3, May 1980, pages 390-397, New York, US; D.C. BOSSEN et al.: "A system solution to the memory soft error problem"

ELECTRONICS, vol. 53, no. 1, January 1980, pages 168-172, New York, US; A. HEIMLICH et al.: "Memory finds and fixes errors to raise reliability of microcomputer"

IEEE Transaction on Computers, Vol. C-27, No. 3, March 1978, Douglas C. Bossen: "Measurement and Generation of Error Correcting Codes for Package Failures", pages 201-204.

**Description**

Background of the Invention

The present invention relates to an error correcting system for a memory in which bits of memory words are divided into N packages of 2 bits per package. More particularly, the present invention relates to a system for correcting all failures of a single monolithic memory chip and detecting all failures of two such chips in a memory where each of the monolithic chips contains 2 bits from a single word.

From an error correction standpoint, it is highly desirable that semiconductor memory systems be organized on a bit per chip basis. In a memory with this type of organization 72 chips would be required to store a 72 bit codeword with each bit of the word on a different chip. The advantage of using one bit per chip memory organization is that a single error correction/double error detection (SEC/DED) error correcting code (ECC) can be used to correct errors when there is a total failure of a chip.

A disadvantage of the one bit per chip organization is that it consumes more electrical power than a multibit per chip organization since there are more chips needed to form an ECC codeword and each of the chips must be powered up when the memory is accessed. Therefore, error correction codes (ECC) that correct single errors and detect double errors caused by both bit and package failures in a memory organized on a multibit per chip basis are highly desirable.

Single error correction/double error detection (SEC/DED) codes for detecting package errors are shown in patent 4,077,028. The problem with these codes is that they do not correct for package errors.

A b-adjacent code of the type described in Bossen U.S. Patent No. 3,634,821 assigned to the assignee of the present invention can be adapted to correct the failure of a single multibit package and detect failure of two multibit packages by the addition of an additional check symbol. The problem with using a b-adjacent code is the large number of check bits required to do the detecting and correcting. Three ECC check bit bytes are necessary in order to correct a one byte error and detect a two byte error using such a b-adjacent code. The number of bytes n correctable by the code is equal to n = $2^b$ + 2. Thus, for a two bit byte n = 6. Since three of the six bytes are ECC check bit bytes only three of the bytes would be data bit bytes.

Another way to correct all single package errors and detect all double package errors, would be to adopt Reed-Solomon codes. Such a technique is described in an article by Kaneda and Fujiwara entitled "Single Byte Error Correcting — Double Byte Error Detecting Codes for Memory Systems" on pages 41 to 46 of the Proceedings of the 10th Fault Tolerant Computing Symposium held on October 1—3, 1980. In the article an existing Reed-Solomon packaged error correcting code was expanded to generate a longer code length package error correcting code which makes efficient use of check bits. While the general category of this generalized code makes of efficient use of check bits, those described as being modularized are not so efficient.

The problem of detecting and possibly correcting package errors has further been addressed in the following documents:

In IBM Technical Disclosure Bulletin, Vol. 22, No. 5, Oct. 1979, p. 2004, C. L. Chen describes an error code with 8 check bits for 64 data bits to correct 3-bit package errors in addition to 1-bit random errors. Detection of double package errors is not disclosed.

US—A—3,755,779 discloses an error correction system for single error correction, related-double-error correction and unrelated-double-error detection with a 13-bit check-field for 64 data bits; here, the number of check bits is rather high and no multiple related-double-errors (package errors) can be detected.

In IEEE Trans. Computers, Vol. C 27, No. 5, 1978, p. 455—459, S. M. Reddy describes a class of linear codes for error control in byte-per-card organized digital systems that simultaneously correct single bit errors and detect byte errors and double bit errors; no correction of byte errors or detection of double byte errors is provided.

Therefore, it is the object of the invention to provide an error correction system using a new modularized code that makes efficient use of the number of correction bits needed to correct, in addition to single and double bit errors, single package errors and detect double package errors where the package errors can be one or more bits in error.

This object is achieved by the invention as defined in claim 1; an embodiment of the invention is described in claim 2.

The proposed code is a single error connection double error detection code which has been expanded to cover 2 bits i.e. the number of bits in the package; it generates unique package syndromes which allow to locate the defective package.

An embodiment of the invention is now described in detail as illustrated in the accompanying drawings of which:

Fig. 1 is a schematic representation of a memory employing the present invention;

Fig. 2 are tables showing the parity matrix H and the matching matrix M of an ECC for the memory shown in Fig. 1;

Fig. 3 is a schematic representation of an ECC encoder for the memory shown in Fig. 1;

Fig. 4 is a schematic for an ECC decoder for the memory shown in Fig. 1.

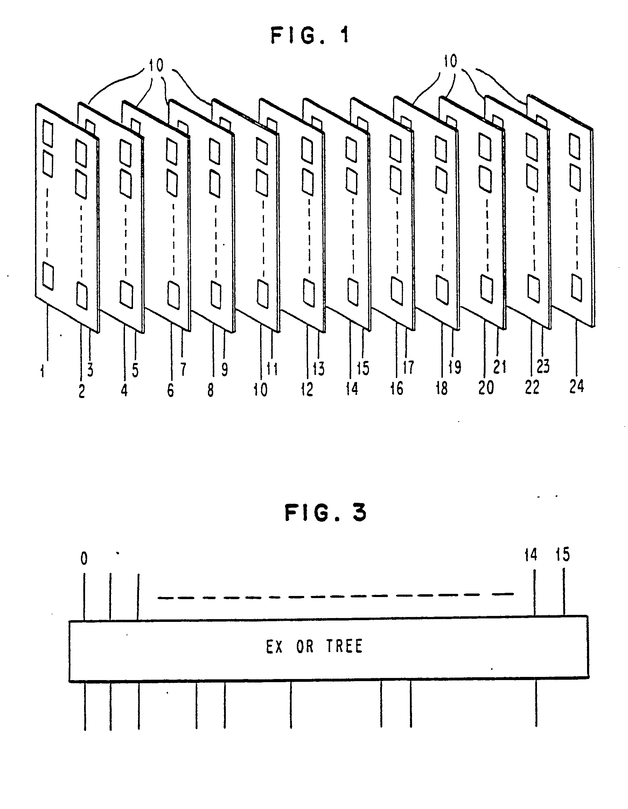

In Fig. 1, a 24-bit codeword is stored in a memory on twelve monolithic chips 10 with two bits on each chip. For reasons that will be apparent hereafter, eight are check bits and sixteen are data bits. If the data bits on each chip 10 are considered to be a single symbol the codeword is made up of 12 symbols. In accordance with the present invention each symbol is assumed to be a single bit and a SEC/DED error correcting code is generated based on that assumption.

Consider the arrangement of putting three identical objects into R pockets. There are K/2 possible arrangements where $K = R \cdot (R—1) \cdot (R—2)/3$ data symbols. For each of such arrangement, we form an R-component column vector V according to the following rules: V contains A's at positions corresponding to empty pockets and V contains B's at positions corresponding to pockets that contain the objects. For example, $R = 4$, $K = 8$, we have the following four column vectors:

$$
\begin{matrix}
A & B & B & B \\
B & A & B & B \\
B & B & A & B \\
B & B & B & A
\end{matrix}
$$

Thus, we can form K/2 R-component vectors that contain A's and B's. Some of the vectors are cyclic shifts of other vectors. We can group these vectors into equivalent classes so that vectors in each class are cyclic shifts of a class representative. Let V1 be a representative of an equivalent class. We form a vector V2 by substituting the three B's of V1 in sequential order by B, C and D. Now we generate a set of vectors by cyclic shifting V2 as many times as the number of vectors in the equivalent class that contains V1. There are K/2 vectors that can be generated from this procedure. Combining the set of vectors with A and B components only and the derived set of vectors with A, B, C and D components, we have K column vectors. Let us call the matrix formed P. For $R = 4$ we have

$$
P = \begin{vmatrix}
A & A & B & D & B & C & B & B \\
B & B & A & A & B & D & B & C \\
B & C & B & B & A & A & B & D \\
B & D & B & C & B & B & A & A
\end{vmatrix}
$$

We now substitute the letters A, B, C and D in P with the following matrices:

$$
A = \begin{vmatrix} 0 & 0 \\ 0 & 0 \end{vmatrix} \qquad C = \begin{vmatrix} 0 & 1 \\ 1 & 1 \end{vmatrix}
$$

$$
B = \begin{vmatrix} 1 & 0 \\ 0 & 1 \end{vmatrix} \qquad D = \begin{vmatrix} 1 & 1 \\ 1 & 0 \end{vmatrix}
$$

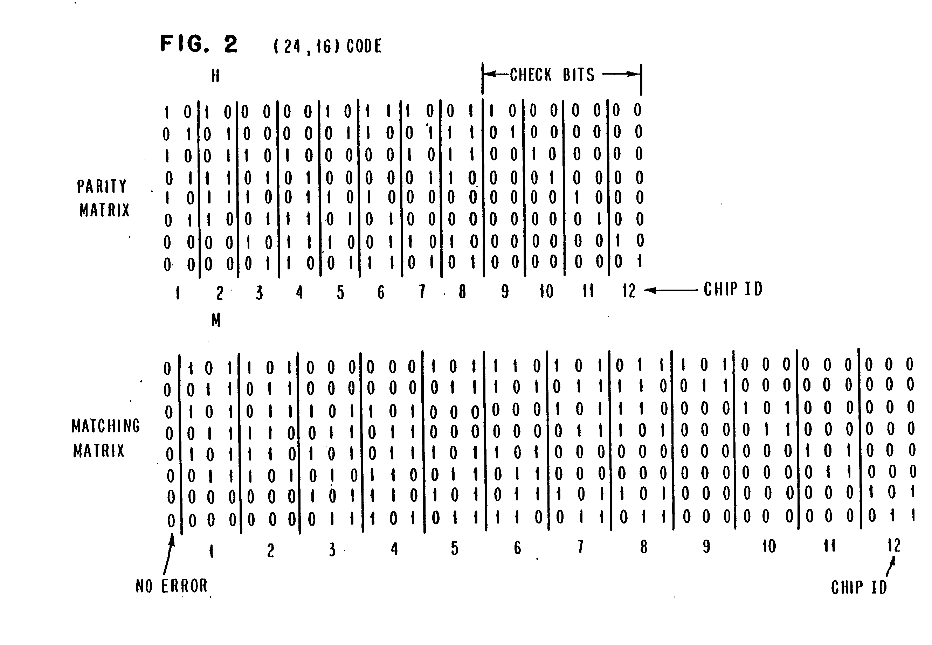

The matrix P becomes a $8 \times 16$ binary matrix. Concatenating the binary matrix P with an identity matrix of order 2R, we have the parity check matrix H of Fig. 2. It can be proved that the code constructed has a minimum distance of 4 over GF(4), and thus it can correct single symbol errors and detect double symbol errors, where a symbol consists of 2 bits.

In the parity matrix H of Fig. 2, each column represents one bit of the code word. The vertical lines between each two columns represent a package or chip boundary. That is, each two bits in the 24 bit code word are on a different chip as shown in Fig. 1. The binary ones in each of the eight rows in the matrix H show which bits are exclusive ORed together by an encoder to generate one of the eight check bits stored with the 16 data bits. For instance, it can be seen from the top row of the matrix H that data bits 1, 3, 9, 11, 12, 13 and 16 in the word are exclusive ORed together to generate the first check bit.

The matching matrix M in Fig. 2 shows the syndromes generated during decoding. If there is no error the syndrome will be a string of eight 0's shown in the first column of the matrix. If there are correctable or uncorrectable errors one or more of the syndromes will be one. Each column containing 1's in the matching matrix M is a syndrome pattern for a single error in one of the bit positions or is a syndrome pattern for a single package failure. For instance, the first of the three columns between the first two vertical lines of the matching matrix M shows the syndromes when a single error has occurred in the first bit of the word, the second column is the syndrome for a single error located in the second bit of the word and the third column which is the exclusive OR of the syndromes of the first two columns is the syndrome pattern for the failure of the package containing the first two bits in the word.

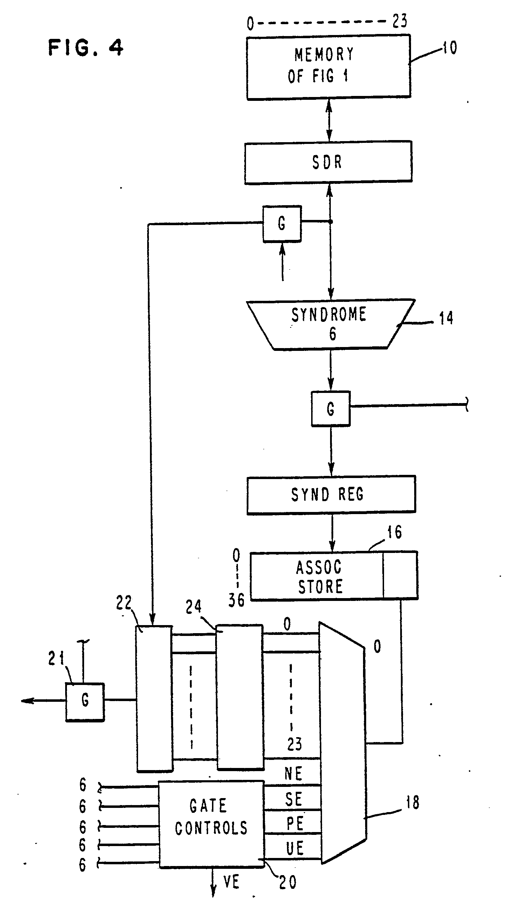

As shown in Fig. 3 a correctional exclusive OR encoding tree 12 is used to generate the parity bits stored in the memory of Fig. 1. The encoding tree is configured in accordance with the parity matrix H of Fig. 2. For instance, the data in the first bit of chip 9 is the exclusive-OR of the data in the first bits of chips 1, 2, 5, 6, 7 and the second bit of chips 6 and 8. If 2-way exclusive-OR gates are used, each check bit is generated using 6 exclusive-OR gates and 3 levels of logic delay.

In Fig. 4, the eight bit output of the syndrome generator 14 is logically the exclusive-OR of the 24 data and check bits read out of the memory 10 shown in Fig. 1. The syndrome decoder 16 is similar to the one shown in Bossen U.S. Patent 4,319,357 and entitled "Double Error Correction Using a Single Error Correcting Code". The decoder 16 is a 37 word associative storage with each of the syndrome bit patterns for a single bit or package error plus the syndrome bit pattern of an errorless word stored at a different word location.

Stored along with each syndrome is a bit number identifying the position of the bit or bits in error in binary sequence. When an interrogation of the table 16 results in a match condition the stored syndrome and the 6 bit binary number identifying the bit position in error are read from the associative store.

Assume that the syndrome generator 16 produces a syndrome of all zeros, or in other words, a syndrome which indicates no bits in the accessed word are in error. Stored along with the syndrome in the associative store with the all zero syndrome would be a string of 6 additional zeros indicating that there is no error. This string of 6 zeros is fed to decoder 18 which then sends a no error signal (NE) to the gate control circuitry 20. This control circuitry 20 generates a gate signal for gate 21 allowing the error free data word stored in register 22 to be transmitted. Again, assume that the syndrome generator generates a syndrome $S_i$ that would indicate that a single bit error has occurred at bit location i. Since all the syndromes identifying single bit errors are stored in the table 16, interrogating with the syndrome $S_i$ results in the location of the bit i in 6 bit binary notation being read out of the associative store 16. The 6 bit binary location of the bit in error is fed to the decoder 18 which decodes it into the one of the 24 locations of the bit inverter 24 for inverting bit i in the word stored in the output register 22. After bit i has been inverted, the controller generates the signal for gate 21 to transmit the corrected word to be processor. If the syndrome generator 14 generates a package error syndrome Spi, interogating the associative store results in the location of the package pi in 6 bit binary notation being read out of the associative store 16. The six bit binary location of the bit in error is fed to decoder 18 which decodes into the two of the 24 locations of the bit inverter 24 for inverting bits i and i + 1 making up the package in error. The inverter inverts these two bits and the corrected data word is transmitted to the processor.

Finally, assume now that a syndrome generator 18 generates a syndrome $S_u$ that does not match with any of the 36 syndromes stored in the associative store 16. Associative store 16 then transmits a 6 bit no compare signal to decoder 18 which transmits an uncorrectable error signal UE to the gate control circuitry 20. Upon receipt of a no compare signal the gate controls flag the appropriate processor that the UE condition exists.

Described above is one embodiment of my invention. Other codes can be developed using the described techniques with different values of R and K. The following is a table of the parameters of some of the possible codes:

| No. of Data Bits | No. of Check Bits |
|---|---|
| 16 | 8 |
| 40 | 10 |
| 80 | 12 |

It can be seen that for 2R check bits, a code in this family can have up to 2K data bits where K = R·(R—1)·(R—2)/3. For applications where the number of data bits is less than 2K, the code can always be shortened. This is done by deleting as many column vectors in P as required to yield the exact number of data bits. For example, to construct a code with 32 data bits and 10 check bits, 8 binary columns out of 40 possible columns can be deleted from the original parity check matrix.

**Claims**

1. Error correction system for a memory in which bits of memory words are divided into N packages of 2 bits per package, the error correction system using an error correction code for single package error correction and double package error detection with 2·R check bits and 2·K data bits and a parity matrix H that is generated according to the following steps:
— generate a K × R matrix P containing a first set of K/2 column vectors with R components to represent all possible distributions of 3 identical objects among R pockets, where empty pockets are labelled A, where pockets that contain an object are labelled B and where K = R·(R—1)·(R—2)/3, and a second set of K/2 column vectors with R components to represent class representatives in the first set and their cyclic shifts, the three B's being substituted in sequential order by B, C, D and a class being comprised by all vectors in the first set which are cyclic shifts of each other,
— substitute the elements A, B, C, D in the matrix P by the matrices

EP 0 097 159 B1

$$A = \begin{vmatrix} 0 & 0 \\ 0 & 0 \end{vmatrix} \qquad C = \begin{vmatrix} 0 & 1 \\ 1 & 1 \end{vmatrix}$$

$$B = \begin{vmatrix} 1 & 0 \\ 0 & 1 \end{vmatrix} \qquad D = \begin{vmatrix} 1 & 1 \\ 1 & 0 \end{vmatrix}$$

— concatenate a 2R × 2R identity matrix to matrix P to obtain the parity matrix H of the error correction code.

2. The error correction system of claim 1, where the error detection code for a 16 bit data word with R = 4 and K = 8 is represented by the parity matrix:

```
      1 0|1 0|0 0|0 0|1 0|1 1|1 0|0 1|1 0|0 0|0 0|0 0
      0 1|0 1|0 0|0 0|0 1|1 0|0 1|1 1|0 1|0 0|0 0|0 0
      1 0|0 1|1 0|1 0|0 0|0 0|1 0|1 1|0 0|1 0|0 0|0 0
H  =  0 1|1 1|0 1|0 1|0 0|0 0|0 1|1 0|0 0|0 1|0 0|0 0
      1 0|1 1|1 0|0 1|1 0|1 0|0 0|0 0|0 0|0 0|1 0|0 0
      0 1|1 0|0 1|1 1|0 1|0 1|0 0|0 0|0 0|0 0|0 1|0 0
      0 0|0 0|1 0|1 1|1 0|0 1|1 0|1 0|0 0|0 0|0 0|1 0
      0 0|0 0|0 1|1 0|0 1|1 1|0 1|0 1|0 0|0 0|0 0|0 1
```

**Patentansprüche**

1. Fehlerkorrektursystem für einen Speicher, in welchem Bits von Speicherworten in N Gruppen von 2 Bits pro Gruppe aufgeteilt werden, wobei das Fehlerkorrektursystem einen Fehlerkorrekturcode für Einzelgruppen-Fehlerkorrektur und Doppelgruppen-Fehlererkennung benützt, mit 2·R Prüfbits und 2·K Datenbits und einer Paritätsmatrix H, die gemäß den folgenden Schritten gebildet wird:

— Bilden einer K × R-Matrix P, mit einem ersten Satz von K/2 Spalten-Vektoren mit R Komponenten zur Darstellung aller möglichen Verteilungen von drei identischen Objekten in R Taschen, wobei leere Taschen mit A und ein Objekt enthaltende Taschen mit B bezeichnet werden, und wobei K = R·(R—1)·(R—2)/3, sowie mit einem zweiten Satz von K/2 Spalten-Vektoren mit R Komponenten zur Darstellung von Klassenvertretern im ersten Satz und deren zyklischen Verschiebungen, wobei die drei B's nacheinander durch B, C, D ersetzt werden und eine Klasse aus allen Vektoren im ersten Satz besteht, die zyklische Verschiebungen voneinander darstellen,

— Ersetzen der Elemente A, B, C, D in der Matrix P durch folgende Matrizen:

$$A = \begin{vmatrix} 0 & 0 \\ 0 & 0 \end{vmatrix} \qquad C = \begin{vmatrix} 0 & 1 \\ 1 & 1 \end{vmatrix}$$

$$B = \begin{vmatrix} 1 & 0 \\ 0 & 1 \end{vmatrix} \qquad D = \begin{vmatrix} 1 & 1 \\ 1 & 0 \end{vmatrix}$$

— Verketten einer 2R × 2R-Identitätsmatrix mit der Matrix P zum Bilden der Paritätsmatrix H des Fehlerkorrektur-Codes.

2. Fehlerkorrektursystem nach Anspruch 1, bei welchem der Fehlerkorrektur-Code für ein 16-Bit-Datenwort mit R = 4 und K = 8 durch folgende Paritätsmatrix dargestellt wird:

6

```
      1 0 | 1 0 | 0 0 | 0 0 | 1 0 | 1 1 | 1 0 | 0 1 | 1 0 | 0 0 | 0 0 | 0 0
      0 1 | 0 1 | 0 0 | 0 0 | 0 1 | 1 0 | 0 1 | 1 1 | 0 1 | 0 0 | 0 0 | 0 0
      1 0 | 0 1 | 1 0 | 1 0 | 0 0 | 0 0 | 1 0 | 1 1 | 0 0 | 1 0 | 0 0 | 0 0
H =   0 1 | 1 1 | 0 1 | 0 1 | 0 0 | 0 0 | 0 1 | 1 0 | 0 0 | 0 1 | 0 0 | 0 0
      1 0 | 1 1 | 1 0 | 0 1 | 1 0 | 1 0 | 0 0 | 0 0 | 0 0 | 0 0 | 1 0 | 0 0
      0 1 | 1 0 | 0 1 | 1 1 | 0 1 | 0 1 | 0 0 | 0 0 | 0 0 | 0 0 | 0 1 | 0 0
      0 0 | 0 0 | 1 0 | 1 1 | 1 0 | 0 1 | 1 0 | 1 0 | 0 0 | 0 0 | 0 0 | 1 0
      0 0 | 0 0 | 0 1 | 1 0 | 0 1 | 1 1 | 0 1 | 0 1 | 0 0 | 0 0 | 0 0 | 0 1
```

## Revendications

1. Système de correction d'erreur pour une mémoire dans laquelle des bits de mots de mémoire sont répartis en N modules de 2 bits par module, le système de correction d'erreur utilisant un code de correction d'erreur pour la correction d'erreur de module simple et la détection d'erreur de module double avec 2·R bits de contrôle et 2·K bits de données et une matrice de parité H qui est engendrée conformément aux opérations suivantes:

— génération d'une matrice P de dimension K × R contenant un premier groupe de K/2 vecteurs en colonne avec R composants pour représenter toutes les distributions possibles de trois objets identiques parmi R cases, les cases vides étant désignées par A, les cases qui contiennent un objet étant désignées par B, et avec K = R·(R—1)·(R—2)/3, et un deuxième groupe de K/2 vecteurs en colonne avec R composants pour représenter des représentations de classes du premier groupe et leurs décalages cycliques, les trois B étant remplacés en ordre séquentiel par B, C, D et une classe étant composée de tous les vecteurs du premier groupe qui sont des décalages cycliques les uns des autres,

— remplacement des éléments A, B, C, D dans la matrice P par les matrices

$$A = \begin{vmatrix} 0 & 0 \\ 0 & 0 \end{vmatrix} \qquad C = \begin{vmatrix} 0 & 1 \\ 1 & 1 \end{vmatrix}$$

$$B = \begin{vmatrix} 1 & 0 \\ 0 & 1 \end{vmatrix} \qquad D = \begin{vmatrix} 1 & 1 \\ 1 & 0 \end{vmatrix}$$

— concaténation d'une matrice d'identité 2R × 2R à la matrice P pour obtenir la matrice de parité H du code de correction d'erreur.

2. Système de correction d'erreur suivant la revendication 1, dans lequel le code de détection d'erreur pour un mot de données de 16 bits avec R = 4 et K = 8 est représenté par la matrice de parité:

```
      1 0 | 1 0 | 0 0 | 0 0 | 1 0 | 1 1 | 1 0 | 0 1 | 1 0 | 0 0 | 0 0 | 0 0
      0 1 | 0 1 | 0 0 | 0 0 | 0 1 | 1 0 | 0 1 | 1 1 | 0 1 | 0 0 | 0 0 | 0 0
      1 0 | 0 1 | 1 0 | 1 0 | 0 0 | 0 0 | 1 0 | 1 1 | 0 0 | 1 0 | 0 0 | 0 0
H =   0 1 | 1 1 | 0 1 | 0 1 | 0 0 | 0 0 | 0 1 | 1 0 | 0 0 | 0 1 | 0 0 | 0 0
      1 0 | 1 1 | 1 0 | 0 1 | 1 0 | 1 0 | 0 0 | 0 0 | 0 0 | 0 0 | 1 0 | 0 0
      0 1 | 1 0 | 0 1 | 1 1 | 0 1 | 0 1 | 0 0 | 0 0 | 0 0 | 0 0 | 0 1 | 0 0
      0 0 | 0 0 | 1 0 | 1 1 | 1 0 | 0 1 | 1 0 | 1 0 | 0 0 | 0 0 | 0 0 | 1 0
      0 0 | 0 0 | 0 1 | 1 0 | 0 1 | 1 1 | 0 1 | 0 1 | 0 0 | 0 0 | 0 0 | 0 1
```

7

# F I G . 1

# F I G . 3

EX  OR  TREE

1

# FIG. 2    (24,16) CODE

H

|←— CHECK BITS —→|

PARITY
MATRIX

```
1 0 | 1 0 | 0 0 | 0 0 | 1 0 | 1 1 | 1 0 | 0 1 | 1 0 | 0 0 | 0 0 | 0 0
0 1 | 0 1 | 0 0 | 0 0 | 0 1 | 1 0 | 0 1 | 1 1 | 0 1 | 0 0 | 0 0 | 0 0
1 0 | 0 1 | 1 0 | 1 0 | 0 0 | 0 0 | 1 0 | 1 1 | 0 0 | 1 0 | 0 0 | 0 0
0 1 | 1 1 | 0 1 | 0 1 | 0 0 | 0 0 | 1 1 | 0 0 | 0 0 | 0 1 | 0 0 | 0 0
1 0 | 1 1 | 1 0 | 0 1 | 1 0 | 1 0 | 0 0 | 0 0 | 0 0 | 0 0 | 1 0 | 0 0
0 1 | 1 0 | 0 1 | 1 1 | 0 1 | 0 1 | 0 0 | 0 0 | 0 0 | 0 0 | 0 1 | 0 0
0 0 | 0 0 | 1 0 | 1 1 | 1 0 | 1 1 | 0 1 | 0 1 | 0 0 | 0 0 | 0 0 | 1 0
0 0 | 0 0 | 0 1 | 1 0 | 0 1 | 1 1 | 0 1 | 0 1 | 0 0 | 0 0 | 0 0 | 0 1
```

  1   2   3   4   5   6   7   8   9  10  11  12 ←—— CHIP ID

M

MATCHING
MATRIX

```
0 | 1 0 1 | 1 0 1 | 0 0 0 | 0 0 0 | 1 0 1 | 1 1 0 | 1 0 1 | 0 1 1 | 1 0 1 | 0 0 0 | 0 0 0 | 0 0 0
0 | 0 1 1 | 0 1 1 | 0 0 0 | 0 0 0 | 0 1 1 | 1 0 1 | 0 1 1 | 1 1 0 | 0 1 1 | 0 0 0 | 0 0 0 | 0 0 0
0 | 1 0 1 | 0 1 1 | 1 0 1 | 1 0 1 | 0 0 0 | 0 0 0 | 1 0 1 | 1 1 0 | 0 0 0 | 1 0 1 | 0 0 0 | 0 0 0
0 | 0 1 1 | 1 1 0 | 0 1 1 | 0 1 1 | 0 0 0 | 0 0 0 | 0 1 1 | 1 0 1 | 0 0 0 | 0 1 1 | 0 0 0 | 0 0 0
0 | 1 0 1 | 1 1 0 | 1 0 1 | 0 1 1 | 1 0 1 | 1 0 1 | 0 0 0 | 0 0 0 | 0 0 0 | 0 0 0 | 1 0 1 | 0 0 0
0 | 0 1 1 | 1 0 1 | 0 1 0 | 1 1 0 | 0 1 1 | 0 1 1 | 0 0 0 | 0 0 0 | 0 0 0 | 0 0 0 | 0 1 1 | 0 0 0
0 | 0 0 0 | 0 0 0 | 1 0 1 | 1 1 0 | 1 0 1 | 0 1 1 | 1 0 1 | 1 0 1 | 0 0 0 | 0 0 0 | 0 0 0 | 1 0 1
0 | 0 0 0 | 0 0 0 | 0 1 1 | 1 0 1 | 0 1 1 | 1 1 0 | 0 1 1 | 0 1 1 | 0 0 0 | 0 0 0 | 0 0 0 | 0 1 1
```

   1    2    3    4    5    6    7    8    9   10   11   12

↑
NO ERROR

CHIP ID

EP 0 097 159 B1

FIG. 4

0 - - - - - - - - - - - 23

MEMORY
OF FIG 1

10

SDR

G

SYNDROME
6

14

G

SYND REG

0
:
36

ASSOC
STORE

16

22

24

0

21

G

G

:

23

NE

6
6
6
6
6

GATE
CONTROLS

SE

PE

UE

18

VE

20

0